# FASCICULE DE BREVET EUROPEEN

(11) **EP 3 107 034 B1**
(45) Date de publication et mention de la délivrance du brevet: **04.08.2021**
(21) Numéro de dépôt: 16174433.9
(22) Date de dépôt: 14.06.2016
(51) Int. Cl.: G06K 9/00, G06F 21/32, G06K 9/62

(54) **PROCEDE D'IDENTIFICATION BIOMETRIQUE**
BIOMETRISCHES IDENTIFIZIERUNGSVERFAHREN
BIOMETRIC IDENTIFICATION METHOD

(30) Priorité: 16.06.2015 FR 1555508
(43) Date de publication de la demande: 21.12.2016
(73) Titulaire: Idemia Identity & Security France, 92400 Courbevoie (FR)
(72) Inventeur: BOCKTAELS, Yves, 92400 - COURBEVOIE (FR); BRINGER, Julien, 92400 - COURBEVOIE (FR); BERTHIER, Mael, 92400 - COURBEVOIE (FR); RAGOT, Marcelin, 92400 - COURBEVOIE (FR)
(74) Mandataire: Lavialle, Bruno François Stéphane

(56) Documents cités:
- WO-A2-2006/044917
- US-A1- 2010 092 048
- US-A1- 2014 095 885
- MAËL BERTHIER ET AL: "Studying Potential Side Channel Leakages on an Embedded Biometric Comparison System", INTERNATIONAL ASSOCIATION FOR CRYPTOLOGIC RESEARCH,, vol. 20140110:092158, 9 janvier 2014 (2014-01-09), pages 1-14, XP061015413,
- TAOUFIK CHOUTA ET AL: "Side channel analysis on an embedded hardware fingerprint biometric comparator & low cost countermeasures", PROCEEDINGS OF THE THIRD WORKSHOP ON HARDWARE AND ARCHITECTURAL SUPPORT FOR SECURITY AND PRIVACY, HASP '14, 15 juin 2014 (2014-06-15), pages 1-6, XP055263326, New York, New York, USA DOI: 10.1145/2611765.2611771 ISBN: 978-1-4503-2777-0
- APOSTOLOS P. FOURNARIS ET AL: "Secure embedded system hardware design - A flexible security and trust enhanced approach", COMPUTERS & ELECTRICAL ENGINEERING., vol. 40, no. 1, 1 janvier 2014 (2014-01-01), pages 121-133, XP055263341, GB ISSN: 0045-7906, DOI: 10.1016/j.compeleceng.2013.11.011
- None

## Description

La présente invention concerne la biométrie et plus particulièrement un procédé d'identification biométrique. Dans le présent document, le terme « empreinte » est utilisé pour désigner un ensemble de caractéristiques biométriques, ou minuties, d'une personne et notamment un ensemble de caractéristiques biométriques d'au moins un de ses doigts, une de ses paumes, d'une partie de son réseau veineux, d'un iris d'au moins un de ses yeux, de son visage, d'une oreille, voire les caractéristiques de sa voix....

### ETAT DE LA TECHNIQUE

L'identification biométrique est basée sur la comparaison d'une empreinte candidate à une empreinte de référence. L'empreinte de référence est enregistrée dans une mémoire telle que celle d'une carte à circuit intégré ou d'un serveur informatique et la comparaison est effectuée par un circuit intégré (celui de la carte à circuit intégré ou l'un de ceux du serveur). L'empreinte candidate est capturée sur la personne que l'on souhaite identifier. La comparaison vise à déterminer un score de l'empreinte candidate en fonction de la proximité entre les caractéristiques de l'empreinte candidate et de l'empreinte de référence. L'identification de la personne à identifier est validée lorsque le score de l'empreinte candidate dépasse un seuil prédéterminé.

Il existe des techniques de fraude consistant à analyser la consommation électrique du circuit intégré, le temps d'exécution et le rayonnement électromagnétique produit lors d'opérations successives d'identification réalisées à partir d'une même empreinte candidate à laquelle de légères modifications ont été apportées d'une opération d'identification à l'autre. Le but de l'analyse de l'alimentation, du temps d'exécution et du rayonnement électromagnétique du circuit intégré est de déterminer l'impact des modifications de l'empreinte candidate sur les paramètres analysés et d'en déduire l'évolution du score résultant de ces modifications. Menée à son terme, une telle analyse, si elle prend du temps, permet néanmoins d'élaborer une empreinte candidate susceptible de valider l'identification.

Ces techniques de fraudes et des solutions pour les entraver sont décrites dans les documents suivants :
- Maël Bertier et al., « Studying Potential Side Channel Leakages on an Embedded Biometric Comparison System », International Association for Cryptologic Reseach, Vol 20140110:092158, pages 1-14, 2014 ;
- US-A-2014/095885 ;
- Toufik Chouta et al., « Side Channel Analysis on an Embedded Fingerprint Biometric Comparator & Low Cost Countermeasures », Proceedings of the Third Workshop on Hardware and Architectural Support for Security and Privacy », HASP '14, 15 juin 2014, pages 1-6, New York.

### OBJET DE L'INVENTION

Un but de l'invention est de fournir un moyen pour améliorer la résistance des procédés d'identification aux fraudes.

### BREF EXPOSE DE L'INVENTION

A cet effet, on prévoit, selon l'invention, un procédé d'identification biométrique selon la revendication 1.

Ainsi, lors d'une attaque de l'algorithme d'identification par modifications successives d'une même empreinte candidate, une partie de l'évolution du score résulte de la prise en compte des caractéristiques altérées, ce qui va fausser le résultat de l'attaque. L'attaquant n'ayant lui aucun moyen de savoir si l'évolution du score résulte de la prise en compte de caractéristiques altérées, la sélection des modifications à conserver est rendue complexe et difficile, voire impossible.

D'autres caractéristiques et avantages de l'invention ressortiront à la lecture de la description qui suit de modes de réalisation particuliers non limitatifs de l'invention.

### BREVE DESCRIPTION DE LA FIGURE

Il sera fait référence à la figure unique annexée représentant schématiquement un dispositif d'identification pour la mise en œuvre du procédé de l'invention.

### DESCRIPTION DETAILLEE DE L'INVENTION

L'invention est ici décrite en application à une identification biométrique sur la base d'une empreinte digitale. Il va de soi que l'invention est applicable à tout type de biométrie et peut par exemple porter sur les caractéristiques d'un iris d'au moins un œil, les caractéristiques d'un réseau veineux, les caractéristiques d'un visage ou d'une oreille, les caractéristiques de la voix...

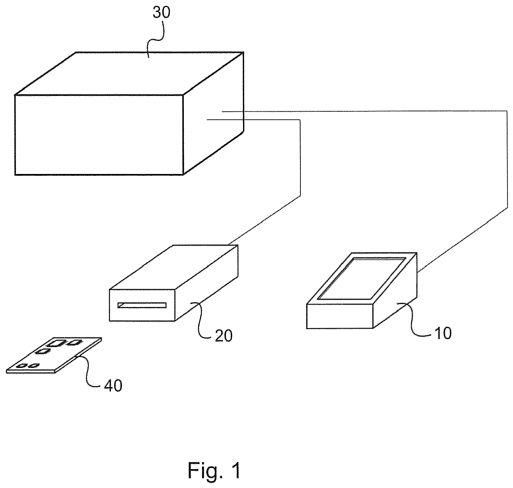

En référence à la figure 1, le procédé de l'invention est ici mis en œuvre au moyen d'un dispositif d'identification comprenant : au moins un organe de capture d'empreinte digitale 10 ; un lecteur de carte à circuit intégré 20 ; une unité informatique 30 reliée au dispositif de capture 10 et au lecteur 20 ; et au moins une carte à circuit intégré 40. L'organe de capture d'empreinte digitale 10 comprend ici un capteur optique mais d'autres technologies sont utilisables. Le lecteur 20 est ici un lecteur de type à contact. L'unité informatique 30 comporte ici un processeur et des mémoires et est agencée pour exécuter un premier programme mettant en œuvre le procédé de l'invention.

Le circuit intégré de la carte à circuit intégré 40 comprend un processeur et une mémoire pour exécuter un second programme mettant en œuvre le procédé de l'invention au moyen d'un algorithme de traitement et comparaison d'empreintes (on parle de programme de « matching » dans la suite) . La carte à circuit intégré 40 est remise à un utilisateur du dispositif. La mémoire de la carte contient également des caractéristiques d'une empreinte de référence constituée d'une empreinte digitale de l'utilisateur à qui la carte à circuit intégré 40 a été remise et, éventuellement, une identification de l'utilisateur, comme son nom, et des droits attachés à l'utilisateur comme le droit de pénétrer tels lieux ou d'accéder à tels fichiers, documents ou informations...

Ainsi, de manière connue en elle-même, préalablement à la mise en œuvre du procédé d'identification est réalisée une opération d'enrôlement au cours de laquelle :
- des caractéristiques biométriques d'une empreinte de référence de l'utilisateur sont capturées ;
- ces caractéristiques biométriques de l'empreinte de référence sont enregistrées dans la mémoire du circuit intégré de la carte à circuit intégré.

Le procédé d'identification biométrique selon l'invention débute par les étapes de :
- capturer des caractéristiques biométriques d'une empreinte candidate sur le même doigt d'un candidat à l'identification ;
- les transmettre au circuit intégré de la carte qui met en œuvre l'algorithme de « matching ».

Ces étapes sont réalisées par l'unité informatique 30 commandant l'organe de capture d'empreinte digitale 10 et le lecteur de carte à circuit intégré 20.

Le procédé de « matching » comprend les étapes suivantes :
- aligner les caractéristiques biométriques de l'empreinte candidate de telle manière que l'empreinte candidate soit orientée et centrée comme l'empreinte de référence ;
- comparer les caractéristiques biométriques de l'empreinte candidate aux caractéristiques biométriques mémorisées de l'empreinte de référence ;
- calculer un score de l'empreinte candidate en fonction d'un nombre de caractéristiques communes aux deux empreintes ;
- valider l'identification si le score de l'empreinte candidate est supérieur à un seuil prédéterminé de validation.

La comparaison des caractéristiques biométriques des empreintes est effectuée en tentant d'apparier chaque caractéristique biométrique de l'empreinte candidate avec l'une des caractéristiques biométriques de l'empreinte de référence. Le score est calculé en fonction des appariements réalisés.

Ces étapes sont connues en elles-mêmes et ne seront pas détaillées ici.

Selon l'invention, le procédé comprend en outre les étapes d'altérer des caractéristiques de l'une des deux empreintes préalablement à la comparaison et de tenir compte de l'altération lors la validation.

Trois modes de mise en œuvre particuliers d'un procédé d'identification sont décrits ci-après, le troisième mode de mise en oeuvre correspondant au procédé d'identification de l'invention.

Dans le premier mode de mise en œuvre, l'altération comprend une opération de masquage d'une partie des caractéristiques biométriques de l'empreinte candidate.

Le masquage est ici réalisé en établissant un vecteur d'aléas (entiers de huit bits non signés par exemple) de même taille que le nombre de caractéristiques de l'empreinte. Le masquage est réalisé après l'extraction de caractéristiques de l'empreinte candidate. Chaque caractéristique de l'empreinte est conservée si la valeur du vecteur associé à l'empreinte est inférieure à une valeur prédéfinie (230, par exemple pour un masquage de 10%).

Cette opération de masquage intervient avant la comparaison des caractéristiques biométriques et, éventuellement, avant l'opération d'alignement de l'empreinte candidate.

Le masquage porte sur 10 à 20 % des caractéristiques biométriques de l'empreinte candidate et est défini aléatoirement après chaque capture d'une empreinte candidate. Ainsi, une même empreinte candidate capturée et comparée deux fois successivement ne donnera pas le même score.

Bien entendu, le calcul du score tient compte du fait que seuls 80 à 90 % de l'empreinte candidate sont visibles.

En variante, le masquage porte sur l'empreinte de référence.

Si des caractéristiques biométriques ajoutées sur l'empreinte candidate par l'attaquant correspondent à des caractéristiques biométriques non masquées de l'empreinte de référence, il s'en suit une évolution favorable du score lors de l'identification. Mais, lors de l'identification suivante, les caractéristiques biométriques de l'empreinte de référence qui sont masquées sont différentes de la fois précédente et il est probable qu'une partie des caractéristiques biométriques préalablement ajoutées ne va plus correspondre aux caractéristiques biométriques non masquées de l'empreinte de référence. Ainsi, ces caractéristiques biométriques préalablement ajoutées à l'empreinte candidate qui avaient fait monter le score n'auront pas d'incidence favorable sur celui-ci.

Dans le deuxième mode de mise en œuvre, l'altération comprend une opération de déformation d'une partie des caractéristiques biométriques de l'empreinte de référence.

La déformation porte sur la position en X, la position en Y ou l'angle. La position en X ou Y est codée sur huit bits et la déformation consiste ici à modifier deux des valeurs de ces huit bits. A titre d'exemple, on modifie la valeur de X et Y jusqu'à un maximum de ±2 sur les 256 valeurs possibles de X et Y (ce qui représente une variation maximale de 0,78% de la plage de valeurs). L'angle est codé sur quatre bits et la déformation consiste à modifier une des valeurs de ces bits. A titre d'exemple, on modifie la valeur de l'angle jusqu'à un maximum de ±1 sur les 128 valeurs possibles de l'angle (ce qui représente une variation maximale de 1,57% de la plage de valeurs).

Cette déformation est déterminée de manière aléatoire et appliquée avant chaque alignement.

Il en résulte que le score peut évoluer en raison de l'appariement d'une caractéristique biométrique de l'empreinte candidate avec une caractéristique biométrique déformée de l'empreinte de référence.

Si un fraudeur présentait deux fois la même empreinte, le score ne sera pas identique pour les deux identifications. L'introduction d'un tel aléa complique la reconstitution de tout ou partie de l'empreinte de référence.

Dans le troisième mode de mise en œuvre, l'altération selon l'invention comprend une opération d'ajout de caractéristiques biométriques factices aléatoirement choisies dans une bibliothèque de caractéristiques biométriques factices mémorisées dans la mémoire de la carte à circuit intégré.

L'algorithme calcule deux scores, à savoir un premier score qui évolue au fur et à mesure que des caractéristiques biométriques de l'empreinte candidate sont appariées avec des caractéristiques biométriques réelles de l'empreinte de référence et un deuxième score qui évolue au fur et à mesure que des caractéristiques biométriques de l'empreinte candidate sont appariées avec des caractéristiques biométriques factices de l'empreinte de référence. De préférence, lorsque qu'une des caractéristiques biométriques de l'empreinte candidate ne peut être appariée avec des caractéristiques biométriques réelles ou factices de l'empreinte de référence, on provoquera une augmentation du deuxième score.

La validation intervient à la fin de la comparaison lorsque le premier score est supérieur au seuil prédéterminé.

En variante du troisième mode de mise en œuvre, l'ajout de caractéristiques biométriques factices aux caractéristiques biométriques réelles est effectué une seule fois lors de l'enrôlement. Pour que la fraude soit plus difficile, il est nécessaire que le nombre de caractéristiques biométriques factices ajoutées soit au moins égal et de préférence supérieur au nombre de caractéristiques biométriques réelles de l'empreinte de référence.

Au fur et à mesure que des caractéristiques biométriques de l'empreinte candidate sont appariées à des caractéristiques biométriques réelles ou factices de l'empreinte de référence, sont calculés un score et un ratio entre le nombre de caractéristiques biométriques réelles appariées et le nombre de caractéristiques biométriques factices appariées.

Pour que l'identification soit validée, il faut que :
- le score soit supérieur au seuil prédéterminé, et
- le ratio soit supérieur à une valeur prédéterminée, ici deux.

La validation n'est donc possible que si le nombre de caractéristiques biométriques réelles appariées est au moins égal à deux fois le nombre de caractéristiques biométriques factices appariées.

Pour s'assurer du respect de ces deux conditions, lorsque le score arrive au voisinage du seuil prédéterminé alors que le ratio n'a pas atteint la valeur prédéterminée, on bloque l'évolution du score tant que le ratio n'a pas dépassé la valeur prédéterminée. Pour éviter qu'une stagnation du score n'éveille les soupçons d'un fraudeur, il peut être envisagé de faire varier légèrement et aléatoirement le score à chaque appariement à une caractéristique biométrique factice sans pour autant que ce score dépasse le seuil.

Comme alternative dans cette variante, et comme précédemment, il est possible de calculer un premier score relatif aux appariements de caractéristiques biométriques réelles et un score relatif aux appariements de caractéristiques biométriques factices. Ces deux calculs doivent être réalisés de manière symétrique pour ne pas être révélés à un éventuel fraudeur.

Bien entendu, l'invention n'est pas limitée au troisième mode de réalisation décrit mais englobe toute variante entrant dans le champ de l'invention telle que définie par les revendications.

Lorsque l'altération est un masquage portant sur l'empreinte de référence, le masquage est de préférence effectué préalablement à chaque identification, après le chargement en mémoire de l'empreinte précédant la comparaison.

Le type d'altération peut être modifié après chaque identification, ou le type d'altération peut être sélectionné aléatoirement.

L'altération porte sur une majorité des caractéristiques ou au moins une partie significative de celles-ci, c'est-à-dire une partie suffisante pour modifier notablement le score d'une comparaison à l'autre d'une même empreinte candidate altérée différemment pour les deux comparaisons.

Les minuties factices peuvent aussi être choisies et différentes pour chaque nouvelle phase de matching. Elles peuvent être choisies suivant des procédés permettant de simuler au mieux des vraies minuties en s'appuyant sur l'empreinte de référence.

Tout type d'algorithme de matching est utilisable et par exemple un algorithme fonctionnant à partir des distances entre minuties sans alignement préalable de celles-ci.

Les caractéristiques biométriques peuvent être fournies directement par un organe de lecture ou capture biométrique ou être transférées par exemple depuis une base de données ou capturées.

Le terme « empreinte » est employé dans le présent document comme désignant un ensemble de caractéristiques biométriques d'une personne de sorte que l'invention n'est aucunement limitée à une application aux empreintes digitales.

## Revendications

1. Procédé d'identification biométrique comprenant les étapes de comparer une empreinte candidate à une empreinte de référence, de calculer un score en fonction d'un nombre de caractéristiques proches des deux empreintes, et de valider l'identification par comparaison du score et d'un seuil prédéterminé de validation, **caractérisé en ce que** le procédé comprend les étapes d'altérer des caractéristiques biométriques de l'une des deux empreintes préalablement à la comparaison des empreintes entre elles et de tenir compte de l'altération lors de la validation de telle manière que, lors d'une attaque de l'algorithme d'identification par modifications successives d'une même empreinte candidate, une partie de l'évolution du score résulte de la prise en compte des caractéristiques altérées, **en ce que** l'altération est un ajout de caractéristiques biométriques factices à des caractéristiques biométriques réelle de l'empreinte, et **en ce que** les caractéristiques biométriques factices sont ajoutées aux caractéristiques biométriques réelles de l'empreinte de référence et la validation comprend l'étape de calculer un premier score qui évolue au fur et à mesure que des caractéristiques biométriques de l'empreinte candidate sont appariées avec des caractéristiques biométriques réelles de l'empreinte de référence et un deuxième score qui évolue au fur et à mesure que des caractéristiques biométriques de l'empreinte candidate sont appariées avec des caractéristiques biométriques factices de l'empreinte de référence, la validation intervenant à la fin de la comparaison lorsque le premier score est supérieur au seuil prédéterminé.

2. Procédé selon la revendication 1, dans lequel lorsque qu'une des caractéristiques biométriques de l'empreinte candidate ne peut être appariée avec des caractéristiques biométriques réelles ou factices de l'empreinte de référence, le deuxième score augmente.

3. Procédé selon la revendication 1, dans lequel les caractéristiques biométriques factices sont ajoutées aux caractéristiques biométriques réelles de l'empreinte de référence lors de l'enregistrement de l'empreinte de référence.

4. Procédé selon la revendication 1, comprenant préalablement à la comparaison une étape d'alignement des empreintes, l'altération d'empreinte étant effectuée avant l'alignement des empreintes.

5. Procédé d'identification biométrique comprenant les étapes de comparer une empreinte candidate à une empreinte de référence, de calculer un score en fonction d'un nombre de caractéristiques proches des deux empreintes, et de valider l'identification par comparaison du score et d'un seuil prédéterminé de validation, **caractérisé en ce que** le procédé comprend les étapes d'altérer des caractéristiques biométriques de l'une des deux empreintes préalablement à la comparaison et de tenir compte de l'altération lors de la validation de telle manière que, lors d'une attaque de l'algorithme d'identification par modifications successives d'une même empreinte candidate, une partie de l'évolution du score résulte de la prise en compte des caractéristiques altérées, **en ce que** l'altération est un ajout de caractéristiques biométriques factices à des caractéristiques biométriques réelle de l'empreinte, **en ce que** les caractéristiques biométriques factices sont ajoutées aux caractéristiques biométriques réelles de l'empreinte de référence, et **en ce que** au fur et à mesure que des caractéristiques biométriques de l'empreinte candidate sont appariées à des caractéristiques biométriques réelles ou factices de l'empreinte de référence, sont calculés un score et un ratio entre le nombre de caractéristiques biométriques réelles appariées et le nombre de caractéristiques biométriques factices appariées et dans lequel pour que l'identification soit validée, il faut que :
- le score soit supérieur au seuil prédéterminé, et
- le ratio soit supérieur à une valeur prédéterminée.

6. Procédé selon la revendication 5, dans lequel, lorsque le score arrive au voisinage du seuil prédéterminé alors que le ratio n'a pas atteint la valeur prédéterminée, on fait varier aléatoirement le score à chaque appariement à une caractéristique biométrique factice sans pour autant que ce score dépasse le seuil.

7. Procédé selon la revendication 5, dans lequel les caractéristiques biométriques factices sont ajoutées aux caractéristiques biométriques réelles de l'empreinte de référence lors de l'enregistrement de l'empreinte de référence.

8. Procédé selon la revendication 7, comprenant préalablement à la comparaison une étape d'alignement des empreintes, l'altération d'empreinte étant effectuée avant l'alignement des empreintes.

## Patentansprüche

1. Biometrisches Identifizierungsverfahren, umfassend die Schritte des Vergleichens eines Kandidatenabdrucks mit einem Referenzabdruck, des Berechnens eines Scores in Abhängigkeit von einer Anzahl von ähnlichen Merkmalen der beiden Abdrücke und des Validierens der Identifizierung durch einen Vergleich des Scores und eines vorbestimmten Validierungsschwellenwerts, **dadurch gekennzeichnet, dass** das Verfahren die Schritte des Änderns von biometrischen Merkmalen eines der beiden Abdrücke vor dem Vergleich der Abdrücke miteinander und des Berücksichtigens der Änderung bei der Validierung umfasst, derart, dass bei einem Angriff auf den Identifizierungsalgorithmus durch aufeinanderfolgende Modifizierungen eines selben Kandidatenabdrucks ein Teil der Veränderung des Scores aus der Berücksichtigung der geänderten Merkmale resultiert, dass die Änderung ein Hinzufügen von unechten biometrischen Merkmalen zu echten biometrischen Merkmalen des Abdrucks ist und dass die unechten biometrischen Merkmale den echten biometrischen Merkmalen des Referenzabdrucks hinzugefügt werden und die Validierung den Schritt des Berechnens eines ersten Scores umfasst, der sich in dem Maße verändert, wie biometrische Merkmale des Kandidatenabdrucks mit echten biometrischen Merkmalen des Referenzabdrucks abgeglichen werden, sowie eines zweiten Scores, der sich in dem Maße verändert, wie biometrische Merkmale des Kandidatenabdrucks mit unechten biometrischen Merkmalen des Referenzabdrucks abgeglichen werden, wobei die Validierung am Ende des Vergleichs erfolgt, wenn der erste Score größer als der vorbestimmte Schwellenwert ist.

2. Verfahren nach Anspruch 1, bei dem, wenn eines der biometrischen Merkmale des Kandidatenabdrucks nicht mit echten oder unechten biometrischen Merkmalen des Referenzabdrucks abgeglichen werden kann, der zweite Score erhöht wird.

3. Verfahren nach Anspruch 1, bei dem die unechten biometrischen Merkmale den echten biometrischen Merkmalen des Referenzabdrucks bei der Speicherung des Referenzabdrucks zugefügt werden.

4. Verfahren nach Anspruch 1, umfassend vor dem Vergleich einen Schritt des Ausrichtens der Abdrücke, wobei die Abdruckänderung vor dem Ausrichten der Abdrücke erfolgt.

5. Biometrisches Identifizierungsverfahren, umfassend die Schritte des Vergleichens eines Kandidatenabdrucks mit einem Referenzabdruck, des Berechnens eines Scores in Abhängigkeit von einer Anzahl von ähnlichen Merkmalen der beiden Abdrücke und des Validierens der Identifikation durch einen Vergleich des Scores und eines vorbestimmten Validierungsschwellenwerts, **dadurch gekennzeichnet, dass** das Verfahren die Schritte des Änderns von biometrischen Merkmalen eines der beiden Abdrücke vor dem Vergleich und des Berücksichtigens der Änderung bei der Validierung umfasst, derart, dass bei einem Angriff auf einen Identifizierungsalgorithmus durch aufeinanderfolgende Modifizierungen eines selben Kandidatenabdrucks ein Teil der Veränderung des Scores aus der Berücksichtigung der geänderten Merkmale resultiert, dass die Änderung ein Hinzufügen von unechten biometrischen Merkmalen zu echten biometrischen Merkmalen des Abdrucks ist, dass die unechten biometrischen Merkmale den echten biometrischen Merkmalen des Referenzabdrucks hinzugefügt werden und dass in dem Maße, wie biometrische Merkmale des Kandidatenabdrucks mit echten oder unechten biometrischen Merkmalen des Referenzabdrucks abgeglichen werden, ein Score und ein Verhältnis zwischen der Anzahl an abgeglichenen echten biometrischen Merkmalen und der Anzahl an abgeglichenen unechten biometrischen Merkmalen berechnet werden, und bei dem es zur Validierung der Identifizierung erforderlich ist, dass:
- der Score größer als ein vorbestimmter Schwellenwert ist und
- das Verhältnis größer als ein vorbestimmter Wert ist.

6. Verfahren nach Anspruch 5, bei dem, wenn der Score in der Nähe des vorbestimmten Schwellenwerts ankommt, während das Verhältnis den vorbestimmten Wert nicht erreicht hat, der Score bei jedem Abgleich mit einem unechten biometrischen Merkmal zufällig geändert wird, ohne dass dieser Score den Schellenwert überschreitet.

7. Verfahren nach Anspruch 5, bei dem die unechten biometrischen Merkmale den echten biometrischen Merkmalen des Referenzabdrucks bei Speicherung des Referenzabdrucks hinzugefügt werden.

8. Verfahren nach Anspruch 7, umfassend vor dem Vergleich einen Schritt des Ausrichtens der Abdrücke, wobei die Abdruckänderung vor dem Ausrichten der Abdrücke erfolgt.

## Claims

1. A biometric identification method comprising the steps of comparing a candidate print with a reference print, calculating a score as a function of a number of characteristics that are close in the two prints and and validating identification by comparing the core with a predetermined validation threshold, the method being **characterized in that** it comprises the steps of altering the biometric characteristics of one of the two prints prior to comparison and of taking the alteration into account during validation in such a manner that, during an attack of the identification algorithm by successive modifications of a same candidate print, a part a the evolution of the score results from the taking into account of the altered biometric characteristics, **in that** the alteration consists in adding fake biometric characteristics to the real biometric characteristics of the print, and **in that** the fake biometric characteristics are added to the real biometric characteristics of the reference print, and validation comprises the step of calculating a first score that varies as the biometric characteristics of the candidate print are matched with real biometric characteristics of the reference print, and a second score that varies as biometric characteristics of the candidate print are matched with fake biometric characteristics of the reference print, validation taking place at the end of the comparison when the first score is greater than the predetermined threshold.

2. A method according to claim 1, wherein when one of the biometric characteristics of the candidate print cannot be matched with real or fake biometric characteristics of the reference print, the second score is increased.

3. A method according to claim 1, wherein the fake biometric characteristics are added to the real biometric characteristics of the reference print during recording of the reference print.

4. A method according to claim 1, including, prior to the comparison, a step of aligning the prints, the print being altered prior to the print being aligned.

5. A biometric identification method comprising the steps of comparing a candidate print with a reference print, calculating a score as a function of a number of characteristics that are close in the two prints and and validating identification by comparing the core with a predetermined validation threshold, the method being **characterized in that** it comprises the steps of altering the biometric characteristics of one of the two prints prior to comparison and of taking the alteration into account during validation in such a manner that, during an attack of the identification algorithm by successive modifications of a same candidate print, a part a the evolution of the score results from the taking into account of the altered biometric characteristics, **in that** the alteration consists in adding fake biometric characteristics to the real biometric characteristics of the print, and **in that** the fake biometric characteristics are added to the real biometric characteristics of the reference print, wherein while biometric characteristics of the candidate print are matched with real or fake biometric characteristics of the reference print, there are calculated a score and a ratio between the number of matched real biometric characteristics and the number of matched fake biometric characteristics, and wherein for identification to be validated, it is necessary for:
• the score to be greater than the predetermined threshold; and
• the ratio to be greater than a predetermined value.

6. A method according to claim 5, wherein, when the score comes into the vicinity of the predetermined threshold while the ratio has not reached the predetermined value, the score is caused to vary randomly on each matching with a fake biometric characteristic, but without that causing the score to exceed the threshold.

7. A method according to claim 5, wherein the fake biometric characteristics are added to the real biometric characteristics of the reference print during recording of the reference print.

8. A method according to claim 7, including, prior to the comparison, a step of aligning the prints, the print being altered prior to the print being aligned.
